# EUROPEAN PATENT APPLICATION

(11) **EP 3 934 377 A1**
(43) Date of publication of application: **05.01.2022**
(21) Application number: 20762194.7
(22) Date of filing: 26.02.2020
(51) Int. Cl.: H05B 3/20, H05B 3/84, B60S 1/02

(54) **PATTERN CONDUCTOR, HEAT-GENERATING PLATE, AND MOBILE BODY**

(30) Priority: 26.02.2019 JP 2019033056
(71) Applicant: Dai Nippon Printing Co., Ltd., Tokyo 162-8001 (JP)
(72) Inventor: ABE, Makoto, Tokyo 162-8001 (JP)
(74) Representative: Müller-Boré & Partner Patentanwälte PartG mbB
(86) International application number: PCT/JP2020/007800
(87) International publication number: WO 2020/175567

(57) **Abstract**

A pattern conductor 40 generates heat when a voltage is applied thereto. The pattern conductor 40 includes: a plurality of linear conductors extending in a thickness direction dT; and a plurality of connection conductors 42 each connecting the at least three linear conductors 41. The connection conductor 42 includes a plurality of connection elements 43 each connecting the two linear conductors 41. A length D of the linear conductor 41 between two connection points 44 where two connection elements 43 that are the connection elements 43 included in one connection conductor 42 and connected to the same linear conductor 41 are connected to the linear conductor 41, is equal to or less than an average of lengths L3 of the two connection elements 43. A length L1 of the linear conductor 41 between two connection points 44 where two connection conductors 42 connected to one and the same linear conductor 41 and adjacent to each other in the thickness direction dT are connected to the linear conductor 41, is twice or more an average of lengths L2 of the two connection conductors 42.

## Description

### Technical Field

The present invention relates to a pattern conductor, a heating plate having the pattern conductor, and a mobile body having the heating plate.

### Background Art

A heating plate having a pattern conductor disposed between a pair of substrates, such as glass substrates, has been conventionally used in widespread. The heating plate is used in, for example, a defroster used in a window glass of a mobile body. The heating plate generates heat by resistance heating when the pattern conductor is energized (see, for example, JP2013-173402, JP8-72674). Since a temperature of the pattern conductor elevates, the heating plate applied to a window glass of a mobile body defogs the window glass, melts snow and/or ice on the window glass, or evaporates water droplets on the window glass, so that an occupant' s field of view in the mobile body can be ensured.

The pattern conductor has, for example, a plurality of linear conductors extending linearly with gaps therebetween. When a linear conductor has a breakage, the broken linear conductor is no more energized and thus generates no heat. When the pattern conductor includes a linear conductor generates no heat, uneven heat generation may occur.

In order to energize a broken linear conductor, it is considered to provide a conductive connection element connecting two linear conductors. Due to the provision of such a connection element, even a broken linear conductor can be energized via the connection element, bypassing a broken portion.

However, even in a pattern conductor in which a plurality of linear conductors are connected via conductive connection elements, uneven heat generation may again occur when a linear conductor has a breakage. When the pattern conductor has uneven heat generation, a field of view through a heating plate having the pattern conductor may have distortion (strain). The inventors have conducted an extensive research and found that such a distortion is generated by heat generated by the pattern conductor, which partially decreases a refractive index of a bonding layer for bonding substrates of the heating plate. Namely, when the pattern conductor has uneven heat generation, the bonding layer has uneven temperature because of the uneven heat generation. A material of the bonding layer is more likely to be altered in a part of the bonding layer, which has a higher temperature, than another part which has a lower temperature. Thus, the refractive index becomes uneven in the bonding layer. Since light transmitting through the bonding layer refracts in accordance with the refractive index of the bonding layer, light transmitting through the bonding layer having an uneven refractive index is distorted.

### Disclosure

The present invention has been made in view of the above studies. The object of the present invention is to suppress, in a field of view through a heating plate, generation of distortion which might be caused by uneven heat generation.

A first pattern conductor of the present invention is a pattern conductor that generates heat when a voltage is applied thereto, comprising:
a plurality of linear conductors extending in a first direction; and
a plurality of connection conductors each connecting the at least three linear conductors;
wherein:
   the connection conductor includes a plurality of connection elements each connecting the two linear conductors;
   a length of the linear conductor between two connection points where two connection elements that are the connection elements included in one connection conductor and connected to the same linear conductor are connected to the linear conductor is equal to or less than an average of lengths of the two connection elements; and
   a length of the linear conductor between two connection points where two connection conductors that are connected to one and the same linear conductor and adjacent to each other in the first direction are connected to the linear conductor is twice or more an average of lengths of the two connection conductors.

A second pattern conductor of the present invention is a pattern conductor that generates heat when a voltage is applied thereto, comprising:
a plurality of linear conductors extending in a first direction; and
a plurality of connection conductors each connecting the at least three linear conductors;
wherein:
   the connection conductor includes a plurality of connection elements each connecting the two linear conductors;
   a length of the linear conductor between two connection points where two connection elements that are the connection elements included in one connection conductor and connected to the same linear conductor are connected to the linear conductor is 1/2 times or less a length of the connection conductor including the two connection elements; and
   a length of the linear conductor between two connection points where two connection conductors that are connected to one and the same linear conductor and adjacent to each other in the first direction are connected to the linear conductor is twice or more an average of lengths of the two connection conductors.

A third pattern conductor of the present invention is a pattern conductor that generates heat when a voltage is applied thereto, comprising:
a plurality of linear conductors extending in a first direction; and
a plurality of connection conductors each connecting the at least three linear conductors;
wherein:
   the connection conductor includes a plurality of connection elements each connecting the two linear conductors;
   a length of the linear conductor between two connection points where two connection elements that are the connection elements included in one connection conductor and connected to the same linear conductor are connected to the linear conductor, is 1/4 times or less a length of the linear conductor between two connection points where the two connection conductors, one of which is the connection conductor including the two connection elements, that are connected to the same linear conductor and adjacent to each other in the first direction are connected to the linear conductor; and
   a length of the linear conductor between two connection points where two connection conductors that are connected to one and the same linear conductor and adjacent to each other in the first direction are connected to the linear conductor is twice or more an average of lengths of the two connection conductors.

In the first to third pattern conductors of the present invention, a plurality of the linear conductors connected by a certain connection conductor may correspond to a plurality of the linear conductors connected by another connection conductor adjacent to the certain connection conductor in the first direction.

A fourth pattern conductor of the present invention is a pattern conductor that generates heat when a voltage is applied thereto, comprising:
a plurality of linear conductors extending in a first direction; and
a plurality of connection conductors each connecting the at least three linear conductors;
wherein:
   the connection conductor includes a plurality of connection elements each connecting the two linear conductors; and
   a plurality of the linear conductors connected by a certain connection conductor correspond to a plurality of the linear conductors connected by another connection conductor adjacent to the certain connection conductor in the first direction.

In the first to fourth pattern conductors of the present invention, regarding intervals between respective two connection conductors adjacent to each other in the first direction and connected to the corresponding linear conductors, a ratio of a maximum interval to a minimum interval may be 3.0 or less.

In the first to fourth pattern conductors of the present invention, the connection element may connect the linear conductors that are adjacent to each other in a second direction not parallel to the first direction.

In the first to fourth pattern conductors of the present invention, the connection elements included in one connection conductor may be continuous in the second direction not parallel to the first direction.

In the first to fourth pattern conductors of the present invention, the connection conductor may connect the at least three linear conductors that are continuously arranged side by side in the second direction not parallel to the first direction.

In the first to fourth pattern conductors of the present invention, the two connection conductors adjacent to each other in the second direction not parallel to the first direction may be offset from each other in the first direction.

In the first to fourth pattern conductors of the present invention, a ratio of a length of the linear conductor to a length of a straight line connecting both ends of the linear conductor may be 1.72 or less.

In the first to fourth pattern conductors of the present invention,
a gap may be formed between the linear conductors adjacent to each other in the second direction not parallel to the first direction, and
a longitudinal direction of the gap may be the first direction.

A heating plate of the present invention comprises:
a first and a second substrates;
any one of the aforementioned pattern conductors, the pattern conductor being disposed between the first substrate and the second substrate; and
a bonding layer bonding the first substrate and the second substrate.

In the heating plate of the present invention,
the bonding layer may include a first part adjacent to the pattern conductor, and a second part offset from the first part, and
the first part may satisfy at least one of the following conditions that the first part contains a plasticizer whose amount per unit mass is smaller than the second part, that the first part has a glass transition temperature higher than the second part, and that the first part has a softening point higher than the second part.

In the heating plate of the present invention, the pattern conductor may be disposed between the first part and the second part, and is adjacent to the second part.

In the heating plate of the present invention, the pattern conductor may have a surface in contact with the first substrate.

A mobile body of the present invention comprises any one of the aforementioned heating plate.

The present invention can suppress, in a field of view through a heating plate, generation of distortion which might be caused by uneven heat generation.

### Brief Description of The Drawings

Fig. 1 is a perspective view schematically showing a mobile object comprising a heating plate. In particular, Fig. 1 schematically shows, as an example of the mobile object, an automobile comprising a front window formed of a heating plate.
Fig. 2 is a view showing the heating plate seen from a normal direction of its plate plane.
Fig. 3 is a cross-sectional view showing an example of of the heating plate taken along an A-A line of Fig. 2.
Fig. 4 is a cross-sectional view showing another example of the heating plate taken along the A-A line of Fig. 2.
Fig. 5 is a plan view of an example of a pattern conductor in this embodiment, showing the pattern conductor from the normal direction of the plate plane of the heating plate.
Fig. 6 is a partial enlarged view of an example of the pattern conductor.
Fig. 7 is a partial enlarged view of an example of one linear conductor.
Fig. 8 is a view for describing an operation of the pattern conductor shown in Fig. 5.
Fig. 9 is a view for describing an operation of the heating plate of Fig. 3.
Fig. 10 is a view for describing an operation of the heating plate of Fig. 4.
Fig. 11 is a view for describing an example of a manufacturing method of a heating plate.
Fig. 12 is a view for describing the example of the manufacturing method of a heating plate.
Fig. 13 is a view for describing the example of the manufacturing method of a heating plate.
Fig. 14 is a view for describing the example of the manufacturing method of a heating plate.
Fig. 15 is a view for describing the example of the manufacturing method of a heating plate.
Fig. 16 is a view for describing the example of the manufacturing method of a heating plate.
Fig. 17 is a view for describing the example of the manufacturing method of a heating plate.
Fig. 18 is a view for describing another example of the manufacturing method of a heating plate.
Fig. 19 is a view for describing the other example of the manufacturing method of a heating plate.
Fig. 20 is a view for describing the other example of the manufacturing method of a heating plate.
Fig. 21 is a view for describing an operation of a conventional pattern conductor.
Fig. 22 is a view for describing an operation of a conventional heating plate.

### Modes

An embodiment is described in detail below with reference to the drawings. In the drawings attached to the specification, a scale dimension, an aspect ratio and so on are changed and exaggerated from the actual ones, for the convenience of easiness in illustration and understanding.

In addition, the term "plate plane (sheet plane, film plane)" means a plane corresponding to a plane direction of a plate-shaped (sheet-shaped, film-shaped) member as a target, when the plate-shaped (sheet-shaped, film-shaped) member as a target is seen as a whole in general.

In the specification, terms specifying shapes, geometric conditions and their degrees, e.g., "parallel", "orthogonal", etc., and values of a length and an angle are not limited to their strict definitions, but construed to include a range capable of exerting a similar function.

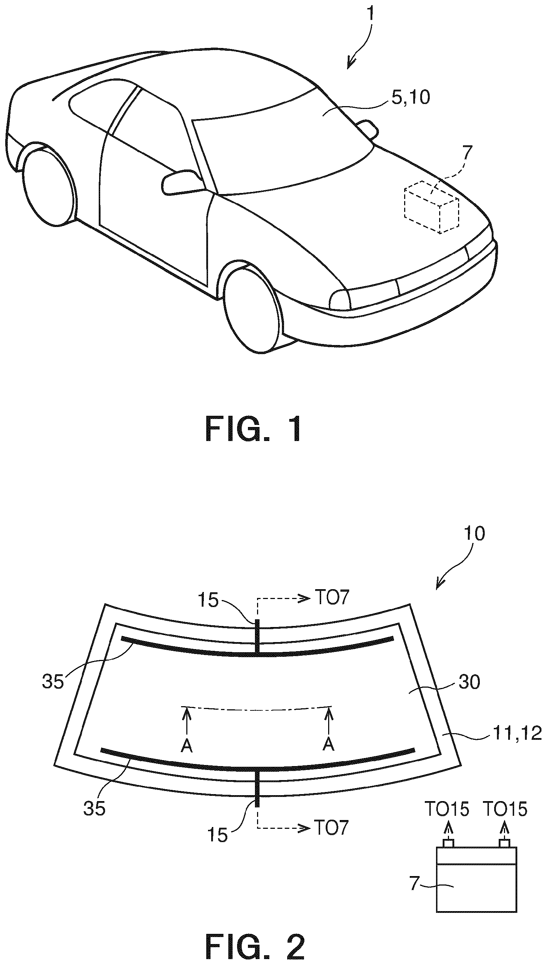

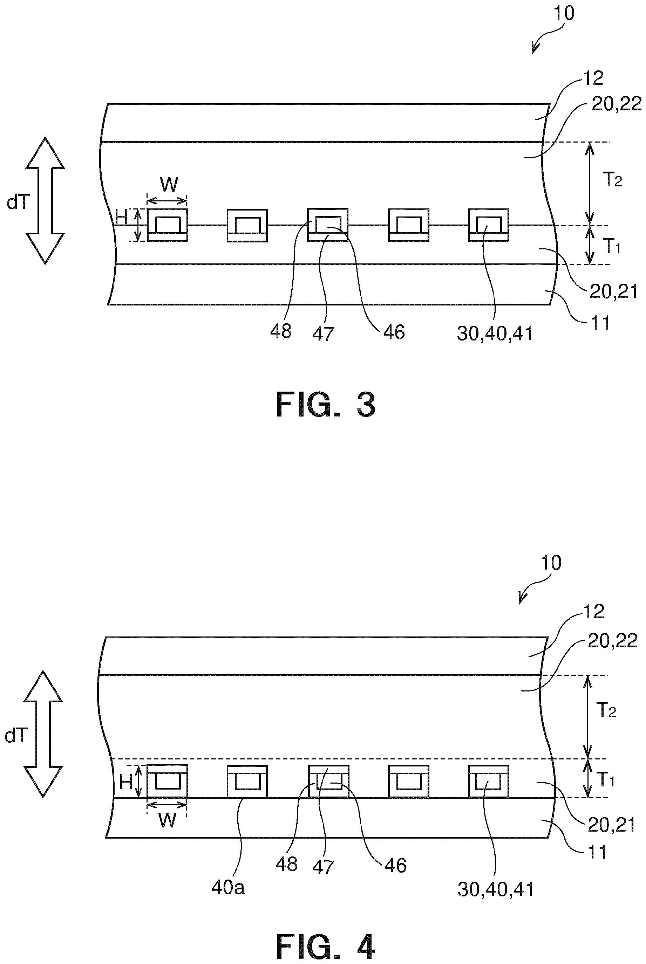

Figs. 1 to 22 are views for describing an embodiment. Fig. 1 is a view schematically showing an automobile comprising a heating plate. Fig. 2 is a view showing the heating plate seen from a normal direction of its plate plane. Figs. 3 and 4 are cross-sectional views respectively showing an example and another example of the heating plate taken along an A-A line of Fig. 2.

As shown in Fig. 1, an automobile 1, which is an example of a mobile object, has windowpanes such as a front window, a rear window and a side window. Herein, a front window 5 formed of a heating plate 10 is shown by way of example. The automobile 1 has a power source 7 such as a battery.

Fig. 2 shows the heating plate 10 seen from a normal direction of its plate plane. Figs. 3 and 4 are cross-sectional views corresponding to an A-A line of the heating plate 10 of Fig. 2. In examples shown in Figs. 3 and 4, the heating plate 10 includes a first substrate 11 and a second substrate 12 which are separated from each other in a thickness direction dT, a heat generation conductor 30 disposed between the first substrate 11 and the second substrate 12, and a bonding layer 20 bonding the first substrate 11 and the second substrate 12. The thickness direction dT is a thickness direction of the heating plate 10. In the illustrated example, the thickness direction dT corresponds to a normal direction to the plate plane of the heating plate 10. In the example shown in Fig. 3, the heat generation conductor 30 is disposed on an intermediate part of the bonding layer 20 in the thickness direction dT. On the other hand, in the example shown in Fig. 4, the heat generation conductor 30 is disposed on an end part of the bonding layer 20 in the thickness direction dT. Although the heating plate 10 is curved in the examples shown in Figs. 1 and 2, the heating plate 10, the first substrate 11 and the second substrate 12 are shown as flat plates in the other drawings with a view to simplifying the drawings and facilitating understanding. Figs. 3 and 4 are cross-sectional views along a direction orthogonal to a longitudinal direction of a linear conductor 41 of the heat generation conductor 30 described later.

As well shown in Figs. 1 and 2, the heating plate 10 has a wiring part 15 for energizing the heat generation conductor 30. In the illustrated example, the heat generation conductor 30 is energized by the power source 7 such as a battery from the wiring part 15 through a bus bar 35 of the heat generation conductor 30, so that the pattern conductor 40 of the heat generation conductor 30 generates heat by resistance heating. The heat generated in the pattern conductor 40 is transmitted to the first substrate 11 and the second substrate 12 to warm the first substrate 11 and the second substrate 12. Thus, fogging caused by dew condensation on the first substrate 11 and the second substrate 12 can be removed. In addition, snow and/or ice on the first substrate 11 and the second substrate 12 can be melted. Thus, an occupant' s field of view is well ensured. Although not shown, the wiring part 15 has a switch inserted (connected in series) between the power source 7 and the bus bar 35 of the heat generation conductor 30. Only when the heating plate 10 needs to be heated, the switch is closed to energize the heat generation conductor 30.

The respective constituent elements of the heating plate 10 are described below.

The first substrate 11 and the second substrate 12 are described first. When the first substrate 11 and the second substrate 12 are used in a front window of an automobile, as in the example shown in Fig. 1, they have preferably a high visible light transmittance in order not to obstruct an occupant's field of view. For example, the visible light transmittance of the first substrate 11 and the second substrate 12 is preferably 90% or more. The visible light transmittance here is obtained as follows. Visible light transmittances with a measurement wavelength of 380 nm to 780 nm are measured by a spectrophotometer ("UV-3100PC" manufactured by Shimadzu Corporation, JIS K 0115 compliant product). The visible light transmittance is specified as an average value of the measured transmittances of respective wavelengths. Examples of a material of the first substrate 11 and the second substrate 12 may include soda lime glass and blue plate glass. The first substrate 11 and the second substrate 12 may be partially or entirely colored to lower a visible light transmittance. In this case, direct sunlight can be blocked and/or an inside of the automobile can be made difficult to see from outside.

The first substrate 11 and the second substrate 12 preferably have a thickness of 1 mm or more and 5 mm or less. The first substrate 11 and the second substrate 12 having such a thickness are excellent in strength and optical characteristics. The first substrate 11 and the second substrate 12 may be formed of the same material and have the same structure, or may differ from each other in at least one of the material and the structure.

Next, the bonding layer 20 is described. The bonding layer 20 is disposed between the first substrate 11 and the second substrate 12 to bond the first substrate 11 and the second substrate 12. A layer made of various adhesive materials can be used as such a bonding layer 20. The bonding layer 20 preferably has a high visible light transmittance. A layer made of polyvinyl butyral (PVB) is a typical bonding layer, for example. As shown in Figs. 3 and 4, the bonding layer 20 has a first part 21 in contact with the first substrate 11, and a second part 22 in contact with the second substrate 12. The first part 21 is adjacent to the heat generation conductor 30. The second part 22 is offset from the first part 21. The first part and the second part 22 have different properties and are offset from each other in the thickness direction dT.

The first part 21 satisfies at least one of the following conditions: that the first part 21 contains a plasticizer whose amount per unit mass is smaller than the second part 22; that the first part 21 has a glass transition temperature higher than the second part 22; and that the first part 21 has a softening point higher than the second part 22. An amount per unit mass of the plasticizer, a glass transition temperature and a softening point of the first part 21 and the second part 22 can be suitably set by adjusting a content of an additive agent added to the first part 21 and a content of an additive agent added to the second part 22, for example. As a specific example, the first part 21 can have an amount of the plasticizer contained therein of 25 wt% or less, a glass transition temperature of 60°C or more, and a softening point of 110°C or more. Further, the first part 21 can have an amount of the plasticizer contained therein of 15 wt% or less, a glass transition temperature of 65°C or more, and a softening point of 140°C or more. The unit [wt%] here represents a mass percent concentration.

A thickness T₁ of the first part 21, i.e., a length of the first part 21 in the thickness direction dT, is preferably smaller (shorter) than a thickness T₂ of the second part 22, i.e., a length of the second part 22 in the thickness direction dT. As a specific example, the thickness T₁ of the first part 21 may be 20 µm or more and 100 µm or less, and may further be 40 µm or more and 80 µm or less. The thickness T₂ of the second part 22 can be selected based on a safety performance of a laminated glass, and may be 150 µm or more and 1600 µm or less, for example. The second part 22 having such a thickness T₂ can efficiently suppress a penetration performance of an impact object and scattering of glass fragments, when the glass is broken.

The heating plate 10 is not limited to the illustrated example, and may be provided with another functional layer expected to exert a specific function. In addition, one functional layer may exert two or more functions. For example, a certain function may be given to at least one of the first substrate 11 of the heating plate 10, the second substrate 12 thereof, the first part 21 of the bonding layer 20, and the second part 22 thereof. A function to be given to the heating plate 10 may be an antireflection (AR) function, a hard coat (HC) function having scratch resistance, an infrared shielding (reflection) function, an ultraviolet shielding (reflection) function, an antifouling function, etc., for example.

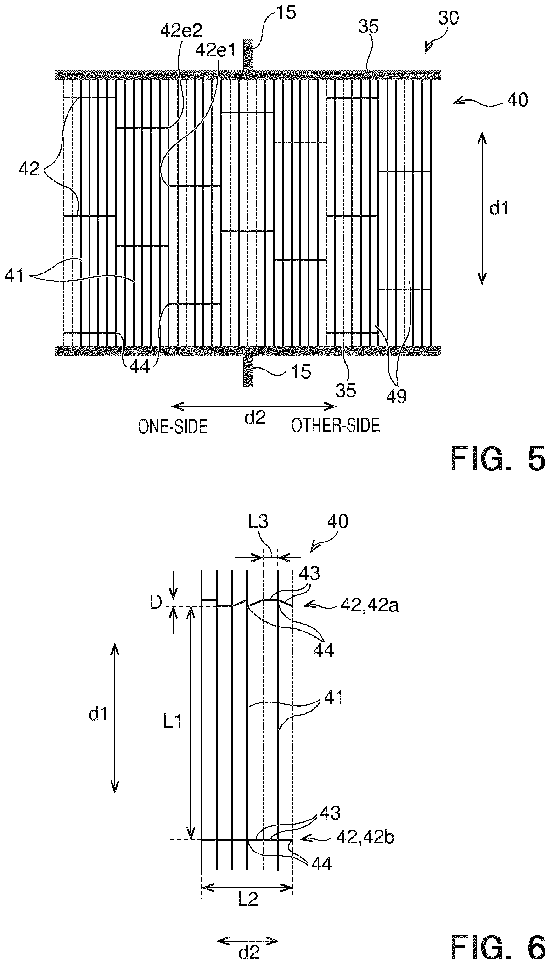

Next, the heat generation conductor 30 is described with reference to Fig. 5. Fig. 5 is a plan view of the heat generation conductor 30 seen from a normal direction of a plate plane of the heating plate 10, showing an arrangement pattern example of the pattern conductor 40 of the heat generation conductor 30.

The heat generation conductor 30 has a pair of the bus bars 35, and the pattern conductor 40 disposed between the pair of bus bars 35. The pattern conductor 40 has a plurality of linear conductors 41 which extend in a first direction d1, and are arranged in a second direction d2 not parallel to the first direction d1. The first direction d1 and the second direction d2 are directions along the plate plane of the heating plate 10. In the illustrated example, the first direction d1 and the second direction d2 are orthogonal or substantially orthogonal to the thickness direction dT. In addition, in the illustrated example, the first direction d1 and the second direction d2 are orthogonal to each other. The pair of bus bars 35 are separated from each other in the first direction d1, and are electrically connected to the respective corresponding wiring parts 15. A voltage of the power source 7 connected to the wiring parts 15 is applied between the pair of bus parts 35. The linear conductor 41 of the pattern conductor 40 is connected at its both ends to the pair of bus bars 35. Thus, the linear conductor 41 electrically connects the pair of bus bars 35. When a voltage is applied to the linear conductor 41 through the wiring part 15 and the bus bar 35, the linear conductor 41 generates heat by resistance heating. Then, the heat is transmitted to the first substrate 11 and the second substrate 12 through the bonding layer 20, so that the first substrate 11 and the second substrate 12 are warmed.

In order that the pattern conductor 40 can generate heat at a suitable heating value, a sheet resistance of the pattern conductor 40 is preferably adjusted in accordance with an applied voltage. When an applied voltage is about 12V, a sheet resistance is preferably 0.1Ω/sq or more and 1Ω/sq or less. When an applied voltage is about 48V, a sheet resistance is preferably 1Ω/sq or more and 13Q/sq or less. Thus, when an applied voltage is in a range between 12V and 48V, a sheet resistance is preferably 0.1Ω/sq or more and 13Q/sq or less. When a resistance of the pattern conductor 40 is excessively large, an amount of heat generated by the pattern conductor 40 is insufficient, so that the first substrate 11 and the second substrate 12 cannot be suitably warmed. On the other hand, when a resistance of the pattern conductor 40 is excessively small, an amount of heat generated by the pattern conductor is excessively large, so that heat generated in an area near each linear conductor 41 of the pattern conductor 40 and heat generated in another area are likely to become uneven.

The pattern conductor 40 can have various arrangement patterns. In an example of the pattern conductor 40 shown in Fig. 5, the pattern conductor 40 is formed by arranging in a stripe pattern a plurality of the linear conductors 41 connecting the pair of bus bars 35. More specifically, the linear conductors 41 extend in the first direction d1, while a gap 49 is formed between the linear conductors 41 adjacent to each other in the second direction d2 not parallel to the first direction d1. Thus, the gaps 49 having a longitudinal direction which is the first direction d1 are arranged in the second direction d2. Not limited to the linear shape shown in Fig. 5, the linear conductor 41 may have a curvilinear shape or a polygonal line shape.

In the pattern conductor 40 shown in Fig. 5, an excessively large gap 49 causes uneven heat generation in the pattern conductor 40. Thus, an average size of the gaps 49, in other words, an average length of the gaps 49 along the second direction d2 along which the gaps 49 are arranged, in still other words, an average distance between the adjacent linear conductors 41 is preferably 12000 µm or less, more preferably 7000 µm, further preferably 3000 µm or less. On the other hand, an excessively small gap 49 lowers a transmittance to deteriorate see-through properties. Thus, an average distance between the adjacent linear conductors 41 is preferably 100 µm or more.

Further, as shown in Fig. 5, the pattern conductor 40 has a plurality of connection conductors 42 each connecting at least three linear conductors 41. In order that the connection conductor 42 can be easily arranged, the connection conductor 42 preferably connects at least three linear conductors 41 that are continuously arranged side by side in the second direction d2. Even when a linear conductor 41 has a breakage, the pair of bus bars 35 can be electrically connected by the linear conductor 41, bypassing the broken portion via connection conductors 42. In the example shown in Fig. 5, the connection conductor 42 is parallel to the second direction d2. However, not limited thereto, the connection conductor 42 may be inclined to the second direction d2. Further, not limited to the linear shape shown in Fig. 5, the connection conductor 42 may have a curvilinear shape or a polygonal line shape.

As described above, the longitudinal direction of the gap 49, which is formed between the linear conductors 41 adjacent to each other in the second direction d2, is the first direction d1. Thus, two connection conductors 42, which are connected to one and the same linear conductor 41 and are adjacent to each other in the first direction d1, are sufficiently separated from each other. Specifically, a length L1 of the linear conductor 41 between two connection points 44 where two connection conductors 42 that are connected to one and the same linear conductor 41 and adjacent to each other in the first direction d1 are connected to the linear conductor 41 is twice or more, preferably three times or more, more preferably five times or more, an average of lengths L2 of the two connection conductors 42.

As shown in Fig. 5, the connection conductors 42 are arranged so as not to be continuous to each other in the pattern conductor 40. In other words, two connection conductors 42 adjacent to each other in the second direction d2 are offset from each other in the first direction d1. Preferably, two adjacent connection conductors 42 are separated from each other by one third or more of the length L1 between two connection points 44 where two connection conductors 42 that are connected to one and the same linear conductor 41 and adjacent to each other in the first direction d1 are connected to the linear conductor 41, which is shown in Fig. 6. Herein, connection conductors 42 adjacent to each other in the second direction d2 mean connection conductors 42 as described below. Namely, a length between one-side end 42e1 of one connection conductor 42 in the second direction d2 and the other-side end 42e2 of the other connection conductor 42 in the second direction d2 is equal to or less than the length L2 of the connection conductor 42 in the second direction d2, and the one-side end 42e1 of the one connection conductor 42 in the second direction d2 is located at the same position in the second direction d2 as the other-side end 42e2 of the other connection conductor 42 in the second direction d2, or is located closer to the other side in the second direction d2 than the other-side end 42e2 of the other connection conductor 42 in the second direction d2. In the illustrated example, the one-side end of the one connection conductor 42 in the second direction d2 and the other-side end of the other connection conductor 42 are connected to adjacent linear conductors 41. The length L2 of such a connection conductors 42 is, for example, 2.5 mm or more and 32 mm or less.

Two connection conductors 42 adjacent to each other in the first direction d1 are not offset from each other in the second direction d2. In other words, two connection conductors 42 adjacent to each other in the first direction d1 are connected completely to the same linear conductors 41. In still other words, a plurality of linear conductors 41 connected by a certain connection conductor 42 correspond to a plurality of linear conductors 41 connected by another connection conductor 42 adjacent to the certain connection conductor 42 in the first direction d1.

When two connection conductors 42 adjacent to each other in the first direction d1 are not offset from each other in the second direction d2, intervals between respective two connection conductors 42, which are adjacent to each other in the first direction d1 and are connected to corresponding linear conductors 41, can be made almost uniform in the pattern conductor 40 as a whole. Specifically, regarding the intervals between respective two connection conductors 42 adjacent to each other in the first direction d1 and connected to corresponding linear conductors 41, a preferable ratio of a maximum interval to a minimum interval is ideally 1. However, in practice, the ratio is preferably 3.0 or less, and more preferably 1.5 or less. When the linear conductors 41 extend linearly parallel to the first direction d1, an interval between two connection conductors 42 adjacent to each other in the first direction d1 and connected to corresponding linear conductors 41 is equal to the length L1 of the linear conductor 41 between two connection points 44 where two connection conductors 42 that are connected to the same linear conductor 41 and adjacent to each other in the first direction d1 are connected to the linear conductor 41.

Fig. 6 shows a part of the pattern conductor 40 in enlargement. As shown in Fig. 6, the connection conductor 42 includes a plurality of connection elements 43 each connecting two linear conductors 41. In order that the connection element 43 can be easily arranged, the connection element 43 preferably connects linear conductors 41 adjacent to each other in the second direction d2.

As shown in a connection conductor 42a shown in Fig. 6, the connection elements 43 included in one connection conductor 42 may be discontinuous in the second direction d2. In this case, a length D of the linear conductor 41 between two connection points 44 where two connection elements 43 that are the connection elements 43 included in one connection conductor 42 and connected to the same linear conductor 41 are connected to the linear conductor 41 is sufficiently short. Specifically, the length D of the linear conductor 41 between two connection points 44 where two connection elements 43 that are the connection elements 43 included in one connection conductor 42 and connected to the same linear conductor 41 are connected to the linear conductor 41 is equal to or less than an average of lengths L3 of the two connection elements 43, preferably 1/2 times or less the average. Alternatively, the length D of the linear conductor 41 between two connection points 44 where two connection elements 43 that are the connection elements 43 included in one connection conductor 42 and connected to the same linear conductor 41 are connected to the linear conductor 41 is 1/2 times or less, preferably 1/4 times or less the length L2 of the connection conductor 42 including the two connection elements 43. Alternatively, the length D of the linear conductor 41 between two connection points 44 where two connection elements 43 that are the connection elements 43 included in one connection conductor 42 and connected to the same linear conductor 41 are connected to the linear conductor 41 is 1/4 times or less, preferably 1/8 times or less the length L1 of the linear conductor 41 between two connection points 44 where two connection conductors 42, one of which is the connection conductor 42 including the two connection elements 43, that are connected to the same liner conductor 41 and adjacent to each other in the first direction d1 are connected to the linear conductor 41.

As above, the connection elements 43 included in one connection conductor 42 may be discontinuous in the second direction d2, as shown by the connection conductor 42a in Fig. 6, but are preferably continuous in the second direction d2, as shown by a connection conductor 42b in Fig. 6. In other words, two connection elements 43 adjacent to each other in the second direction d2 may be offset from each other in the first direction d1, but are preferably not offset from each other in the first direction d1. In still other words, two connection points 44 where two connection elements 43 that are the connection elements 43 included in one connection conductor 42, connected to the same linear conductor 41 and adjacent to each other in the second direction are connected to the linear conductor 41 are preferably the same points. Namely, the length D of the linear conductor 41 between two connection points 44 where two connection elements 43 that are the connection elements 43 included in one connection conductor 42 and connected to the same linear conductor 41 are connected to the linear conductor 41 is preferably 0.

One connection conductor 42 means a connection conductor in which a plurality of the connection elements 43 included in the connection conductor 42 are arranged in the second direction d2 with almost no offset or without any offset, so that the connection elements 43 are seen to be continuous when the pattern conductor 40 is seen as a whole. As a specific example, in this embodiment, one connection conductor 42 means a connection conductor in which the length D of the linear conductor 41 between two connection points 44 where two connection elements 43 that are the connection elements 43 included in one connection conductor 42 and connected to the same linear conductor 41 are connected to the linear conductor 41 is 0.3 times or less L1.

In the example shown in Fig. 6, the connection element 43 is parallel to the second direction d2. However, not limited to this example, the connection element 43 may be inclined to the second direction d2. Further, not limited to the linear shape shown in Fig. 6, the connection element 43 may have a curvilinear shape or a polygonal line shape. However, in order to reduce a resistance of the connection element 43 to suppress heat generation in the connection element 43, the length of the connection element 43 is preferably short. Specifically, the length of the connection element 43 is preferably twice or less a length between the linear conductors 41 adjacent to each other in the second direction d2, i.e., a width of the gap 49, more preferably equal to the width of the gap 49.

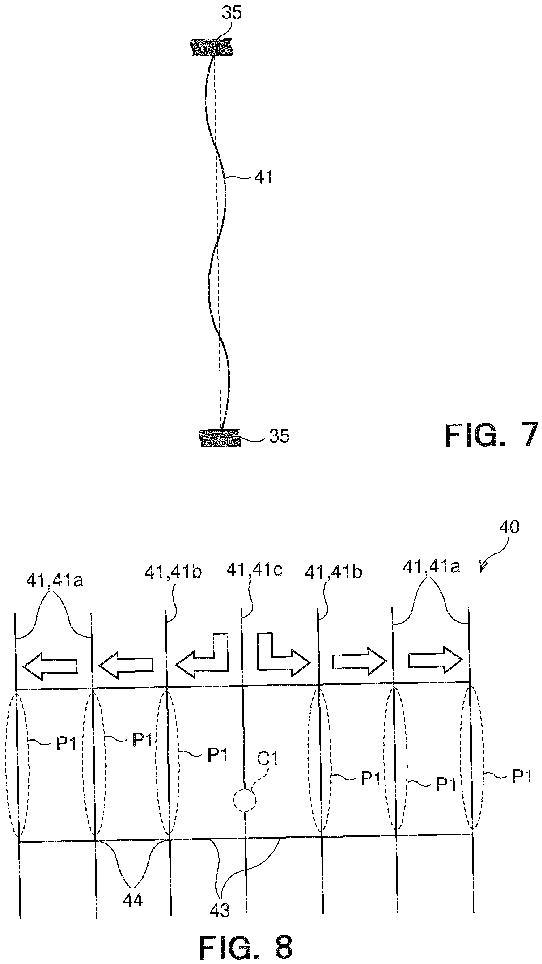

Fig. 7 shows one linear conductor 41 coupling the pair of bus bars 35. In the illustrated example, the linear conductor 41 has a wavy shape. Since a linear conductor 41 having a large undulation (waviness) is easy to notice, the undulation (waviness) of the linear conductor 41 is preferably small. Specifically, a ratio of a length of the linear conductor 41 to a length of a straight line connecting both ends of the linear conductor 41 is preferably 1.72 or less. The both ends of the linear conductor 41 are connection points where the linear conductor 41 is connected to the pair of bus bars 35.

As shown in Figs. 3 and 4, the heat generation conductor 30 is embedded in the bonding layer 20. In the example shown in Fig. 3, the heat generation conductor 30 is disposed between the first part 21 and the second part 22 of the bonding layer 20. In other words, the heat generation conductor 30 is disposed on an intermediate part of the bonding layer 20 in the thickness direction dT. The heat generation conductor 30 is adjacent not only to the first part 21 but also to the second part 22. On the other hand, in the other example shown in Fig. 4, the heat generation conductor 30 is embedded in the bonding layer 20 so as to be disposed on an end on the first part 21 side of the bonding layer 20 in the thickness direction dT. Namely, the heat generation conductor 30 is adjacent to the first part 21 and is in contact with the first substrate 11. Further, in the cross-section shown in Fig. 4, the pattern conductor 40 of the heat generation conductor 30 has a surface 40a in contact with the first substrate 11.

Materials for forming such a pattern conductor 40 and the bus bar 35 may include, for example, one or more of gold, silver, copper, platinum, aluminum, chromium, molybdenum, nickel, titanium, palladium, indium, tungsten, and alloys thereof. The pattern conductor 40 and the bus bar 35 may be formed of the same material, or may be formed of materials different from each other.

As described above, the pattern conductor 40 may be formed of an opaque metal material. On the other hand, a ratio of an area which is not covered with the pattern conductor 40, i.e., a non-coverage ratio (aperture ratio) is as high as about 70% or more and 90% or less. In addition, a line width of the linear conductor 41 of the pattern conductor 40 is 2 µm or more and 20 µm or less. Thus, the area in which the pattern conductor 40 is provided is seen as transparent as a whole. Namely, the presence of the pattern conductor 40 does not impair the see-through properties of the heating plate 10.

In the example shown in Figs. 3 and 4, the linear conductor 41 has generally a rectangular cross-section. As described above, a width W of the linear conductor 41, i.e., the width W of the linear conductor 41 along the plate plane of the heating plate 10 is preferably 2 µm or more and 20 µm or less, and a height (thickness) H thereof, i.e., the height (thickness) H along the normal direction to the plate plane of the heating plate 10 is preferably 1 µm or more and 30 µm or less. Since the linear conductor 41 having such dimensions is sufficiently thin, the linear conductor 41 can be effectively made invisible.

As shown in Figs. 3 and 4, the linear conductor 41 may include a conductive layer 46, a first dark color layer 47, and a second dark color layer 48. The first dark color layer covers a surface of the conductive layer 46, which faces the first substrate 11. The second dark color layer 48 covers a surface of the conductive layer 46, which faces the second substrate 12, and side surfaces of the conductive layer 46. In particular, the linear conductor 41 preferably includes at least the first dark color layer 47. The conductive layer 46 formed of a metal material having an excellent conductivity exhibits relatively a high reflectance. When light is reflected by the conductive layer 46 serving as the linear conductor 41, the reflected light becomes visible, which may obstruct an occupant's field of view. In addition, the conductive layer 46, which is seen from outside, may impair the design. Thus, the first dark color layer 47 and the second dark color layer 48 cover at least partially the surface of the conductive layer 46. It is sufficient that the first dark color layer 47 and the second dark color layer 48 have a visible light reflectance lower than the conductive layer. They may be, e.g., layers having a dark color such as a black color. The first dark color layer 47 and the second dark color layer 48 make it difficult for the conductive layer 46 to be seen, so that an occupant's field of view can be well ensured. In addition, impairment of the design when seen from outside can be prevented.

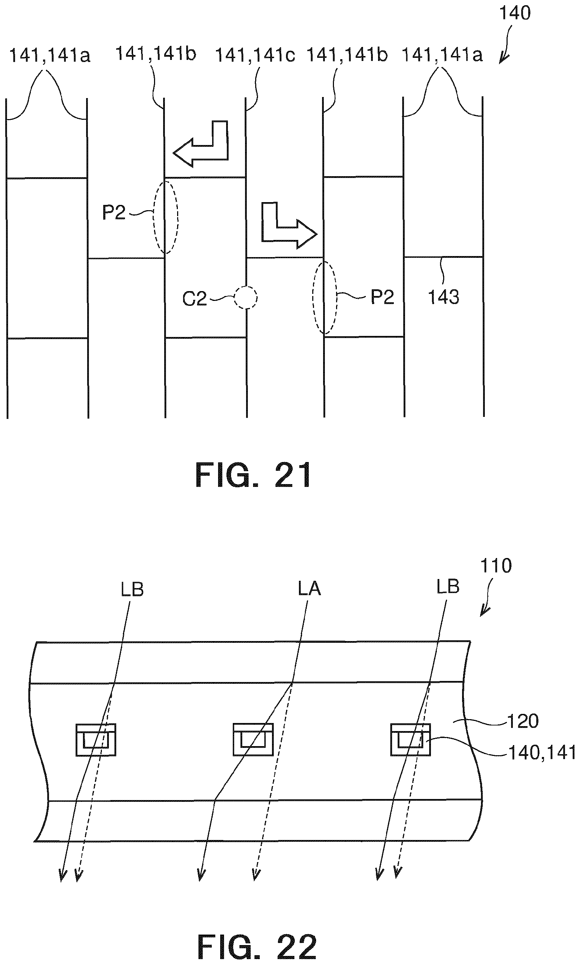

As described above, in a conventional heating plate, a plurality of linear conductors are connected by conductive connection elements, in order to generate heat by energizing a broken linear conductor. In this case, a pattern conductor may have uneven heat generation, when a linear conductor has a breakage. The inventors have found that, since a current flows through a connection element connected to the broken linear conductor, a large amount of current flows through another linear conductor connected to the connection element. Namely, as show in Fig. 21, in a conventional pattern conductor 140 of a conventional heating plate, when a linear conductor 141c has a breakage C2, a current bypasses the linear conductor 141c having the breakage to flow into another linear conductor 141b connected to the linear conductor 141c having the breakage. Thus, as in parts P2 in Fig. 21, the linear conductor 141b connected to the linear conductor 141c having the breakage has the part P2 through which a larger amount of current flows than another linear conductor 141a. The part P2 of the linear conductor 141b through which a larger amount of current has flown generates more heat than another part. Thus, heat generation becomes uneven between the part P2 of the linear conductor 141b through which a larger amount of current has flown, and another part.

As a result of the uneven heat generation of the pattern conductor 140, as shown in Fig. 22, a temperature in a bonding layer 120 of a conventional heating plate 110 becomes uneven. A refractive index of the bonding layer 120 tends to change depending on a temperature. Thus, a difference in refractive index occurs in the bonding layer 120. This difference in refractive index causes distortion in a field of view through the heating plate 110. Namely, a path of light LA which transmits through a part of a larger refractive index largely differs from that of light LB which transmits through a part of a smaller refractive index. The difference in light paths is seen as distortion.

On the other hand, in the pattern conductor 40 of the heating plate 10 according to this embodiment, as shown in Fig. 8, when a linear conductor 41c has a breakage C1, a current flows via the connection conductor 42, bypassing the linear conductor 41c having the breakage, as shown by arrows in Fig. 8. Since the connection conductor 42 connects at least three linear conductors 41, a current flows in a dispersed manner not only through the linear conductor 41b connected to the linear conductor 41c having the breakage, but also through the linear conductor 41a further connected to the linear conductor 41b connected to the linear conductor 41c having the breakage.

In particular, since the length D of the linear conductor 41 between two connection points 44 where two connection elements 43 that are the connection elements 43 included in one connection conductor 42 and connected to the same linear conductor 41 are connected to the linear conductor 41 is sufficiently short, even when a current flows through between the two connection points 44 where two connection elements 43 connected to a linear conductor 41 are connected to the linear conductor 41, excessive heat is unlikely to be generated. Specifically, the length D of the linear conductor 41 between two connection points 44 where two connection elements 43 that are the connection elements 43 included in one connection conductor 42 and connected to the same linear conductor 41 are connected to the linear conductor 41 is equal to or less than an average of lengths L3 of the two connection elements 43; or is 1/2 times or less the length L2 of the connection conductor 42 including the two connection elements 43; or is 1/4 times or less the length L1 of the linear conductor 41 between two connection points 44 where two connection conductors 42, one of which is the connection conductor 42 including the two connection elements 43, that are connected to one and the same linear conductor 41 and adjacent to each other in the first direction d1 are connected to the linear conductor 41. In this case, even when a linear conductor 41 of the pattern conductor 40 has a breakage, a part which generates excessive heat is hardly to occur. Thus, it is possible to suppress, in a field of view through the heating plate 10, generation of distortion which might be caused by uneven heat generation.

When the length L1 of the linear conductor 41 between two connection points 44 where two connection conductors 42 that are connected to one and the same linear conductor 41 and adjacent to each other in the first direction d1 are connected to the linear conductor 41 is twice or more an average of lengths L2 of the two connection conductors 42, the length between the two connection conductors 42 is long. Thus, when a linear conductor 41 has a breakage, uneven heat generation would be likely to occur. However, even in this case, when the length D of the linear conductor 41 between two connection points 44 where two connection elements 43 connected to the same linear conductor 41 are connected to the linear conductor 41 is sufficiently short, uneven heat generation can be effectively suppressed. Thus, it is possible to suppress, in a field of view through the heating plate 10, generation of distortion which might be caused by uneven heat generation.

The connection elements 43 included in one connection conductor 42 are continuous in the second direction d2. Namely, the length D of the linear conductor 41 between two connection points 44 where two connection elements 43 that are the connection elements 43 included in one connection conductor 42 and connected to the same linear conductor 41 are connected to the linear conductor 41 is 0. In this case, when the linear conductor 41 has a breakage, current flows in a dispersed manner more easily through the linear conductors 41. This can suppress uneven heat generation effectively. Thus, it is possible to suppress, in a field of view through the heating plate 10, generation of distortion which might be caused by uneven heat generation.

Further, even when the number of linear conductors 41 connected by the connection conductor 42 is more than a predetermined number, namely, even when the connection conductor 42 is long, amounts of current dispersedly flowing through a plurality of linear conductors 41 bypassing the linear conductor 41 having a breakage are almost unchanged. In other words, the connection conductor 42 having a length of a certain degree and connecting the plurality of linear conductors 41 can sufficiently suppress uneven heat generation. On the other hand, an excessively long connection conductor 42 may impair a filed of view through the heating plate 10, when the heating plate 10 having the pattern conductor 40 is seen as a whole. This is because the connection conductors 42 extending in the second direction d2, and intersections of the linear conductors 41 and the connection conductor 42 are conspicuous. Thus, two connection conductors 42 adjacent to each other in the second direction d2 are preferably offset from each other in the first direction d1. The structure in which two connection conductors 42 adjacent to each other in the second direction d2 are offset from each other in the first direction d1 can effectively suppress that a field of view is impaired by the connection conductor 42 in the second direction d2, when the heating plate 10 is seen as a whole. The length L2 of the connection conductor 42, which can effectively suppress impairment of a field of view while suppressing uneven heat generation, is 2.5 mm or more and 32 mm or less, for example.

A plurality of linear conductors 41 connected by a certain connection conductor 42 correspond to a plurality of conductors 41 connected by another connection conductor 42 adjacent to the certain connection conductor 42 in the first direction d1. In such a pattern conductor 40, the connection conductors 42 can be arranged so as not to be concentrated in the first direction d1. Thus, when the heating plate 10 is seen as a whole, it can be effectively suppressed that a field of view is impaired by the connection conductors 42 extending in the second direction d2. Further, in such a pattern conductor 40, even when a linear conductor 41 has a breakage, since other connection conductors 42 are not connected to only some of a plurality of linear conductors 41 connected by a certain connection conductor 42, currents flowing through linear conductors 41 between respective two connection conductors 42 adjacent to each other in the first direction d1 can be made almost uniform. Namely, even when a linear conductor 41 has a breakage, uneven heat generation is hard to occur in respective linear conductors 41. Since uneven heat generation is suppressed, generation of distortion which might be caused by uneven heat generation can be suppressed.

In particular, when a plurality of linear conductors 41 connected by a certain connection conductor 42 correspond to a plurality of conductors 41 connected by another connection conductor 42 adjacent to the certain connection conductor 42 in the first direction d1, intervals between respective two connection conductors 42 adjacent to each other in the first direction d1 and connected to the corresponding linear conductors 41 can be made uniform in the pattern conductor 40 as a whole. Specifically, regarding an interval between the two connection conductors 42 adjacent to each other in the fist direction d1 and connected to the corresponding linear conductors 41, a ratio of a maximum interval to a minimum interval may be 3.0 or less. A length of the part P1 of the linear conductor 41, through which a larger amount of current is likely to flow when a breakage occurs, depends on the interval between two connection conductors 42 adjacent to each other in the first direction d1. The smaller the length of the linear conductor 41b is, the smaller an amount of generated heat becomes. Thus, a difference in amount of generated heat between the linear conductor 41b and other linear conductors 41a can be reduced. Thus, uneven heat generation in the pattern conductor 40 can be made difficult to occur. By eliminating variation in interval between two connection conductors 42 adjacent to each other in the first direction d1 and reducing the maximum value, in other words, by arranging the connection conductors 42 such that intervals between respective two connection conductors 42 adjacent to each other in the first direction d1 are almost uniform, uneven heat generation upon breakage can be sufficiently suppressed by a few connection conductors 42. In other words, even when the number of connection conductors 42 connecting a plurality of linear conductors 41 is reduced in the pattern conductor 40 as a whole, uneven heat generation can be made difficult to occur, when a linear conductor 41 has a breakage. Since the connection conductors 42 are few, impairment of a field of view through the pattern conductor 40 because the connection conductors 42 can be seen is unlikely to occur. Thus, when the heating plate 10 is seen as a whole, impairment of a field of view can be effectively suppressed.

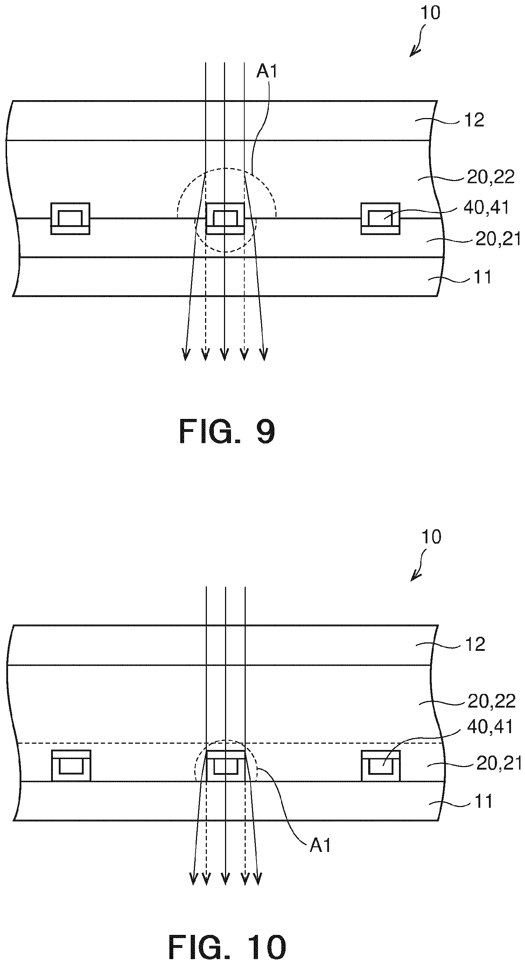

In the heating plate 10 in this embodiment, the first part 21 of the bonding layer 20 satisfies at least one of the following conditions: that the first part 21 contains a plasticizer whose amount per unit mass is smaller than the second part 22 which is offset from the first part 21 in the thickness direction dT; that the first part 21 has a glass transition temperature higher than the second part 22; and that the first part 21 has a softening point higher than the second part 22. In other words, the first part 21 is less likely to be altered by heat than the second part 22. Such a first part 21 is adjacent to the heat generation conductor 30. Thus, a peripheral area A1, shown in Figs. 9 and 10, of the linear conductor 41 of the heat generation conductor 30, which may be altered by heat, can be reduced. As shown by solid line arrows in Figs. 9 and 10, when light incident on the heating plate 10 transmits through the heated heating plate 10, the light emerges therefrom such that its path differs only a little from dotted line arrows which indicate light that does not refract. In this way, generation of distortion can be more suppressed.

Fig. 9 shows an operation of the heating plate 10 shown in Fig. 3, while Fig. 10 shows an operation of the heating plate 10 shown in Fig. 4.

Specifically, the first part 21 satisfies at least one of conditions: that an amount of the plasticizer contained therein is 25 wt% or less; that a glass transition temperature is 60°C or less; and that a softening point is 110°C or more. In this case, a size of the peripheral area A1, which may be altered by heat transmittable to the first part 21, can be effectively reduced. Thus, generation of distortion can be effectively suppressed in a field of view through the heating plate 10. From the viewpoint of distortion suppression, it is more preferable that the first part 21 satisfies at least one of an amount of the plasticizer contained therein of 15 wt% or less, a glass transition temperature of 65°C or more, and a softening point of 110°C or more, and it is further preferable that the first part 21 satisfies at least one of an amount of the plasticizer contained therein of 0 wt% or less, a glass transition temperature of 70°C or more, and a softening point of 175°C or more.

In addition, as shown in Figs. 3 and 4, the thickness T₁ of the first part 21 is thinner than the thickness T₂ of the second part 22. Specifically, the thickness T₁ of the first part 21 is 20 µm or more and 100 µm or less, more preferably 80 µm or less. Since the thickness T₁ of the first part 21, which is unlikely to be altered by heat, the bonding layer 20 can be likely to be altered by heat as a whole. Thus, it is easy to bond the first substrate 11 and the second substrate 12 by the bonding layer 20.

In the example shown in Fig. 3, the heat generation conductor 30 is disposed between the first part 21 and the second part 22 of the bonding layer 20, and is adjacent to the second part 22. Namely, the heat generation conductor 30 is disposed on an intermediate part of the bonding layer 20 in the thickness direction dT, and is adjacent to both the first part 21 and the second part 22. Thus, the heating plate 10 can stably hold the heat generation conductor 30. When the first part 21 is thinner than the second part 22, heat generated by the heat generation conductor 30 can be easily transmitted to the first substrate 11 through the first part 21. Namely, more heat can be conducted to the first substrate 11. In other words, less heat is conducted to the bonding layer 20. Thus, the peripheral area A1, which may be altered, by heat can be further reduced. Since a path of light incident on the heating plate 10 differs only a little, generation of distortion can be further suppressed. In addition, since heat can be easily transmitted to the first substrate 11, the first substrate 11 can be effectively caused to generate heat. This is particularly beneficial when only one side of the heating plate 10, such as an outside of the front window 5 of the automobile 1 shown in Fig. 1, is effectively caused to generate heat.

On the other hand, in the example shown in Fig. 4, the heating generator 30 has the surface 40a in contact with the first substrate 11. When the heat generation conductor 30 has the surface 40a in contact with the first substrate 11, heat generated by the heat generation conductor 30 can be effectively transmitted to the first substrate 11. Namely, more heat can be conducted to the first substrate 11. In other words, less heat is conducted to the bonding layer 20. Thus, the peripheral area A1, which may be altered by heat, can be further reduced. Since a path of light incident on the heating plate 10 differs only a little, generation of distortion can be further suppressed. In addition, since heat can be easily transmitted to the first substrate 11, the first substrate 11 can be effectively caused to generate heat. This is particularly beneficial when only one side of the heating plate 10, such as an outside of the front window 5 of the automobile 1 shown in Fig. 1, is effectively caused to generate heat.

The linear conductor 41 preferably has the surface 40a in contact with the first substrate 11 in a cross-section orthogonal to the longitudinal direction of the linear conductor 41, i.e., in the cross-section of Figs. 3 and 4. In this case, heat generated by the heat generation conductor 30 can be effectively transmitted to the first substrate 10. Namely, more heat can be conducted to the first substrate 11. In other words, less heat is conducted to the bonding layer 20. Thus, the peripheral area A1, which may be altered by heat, can be further reduced. Since a path of light incident on the heating plate 10 differs only a little, generation of distortion can be further suppressed. In addition, since heat can be easily transmitted to the first substrate 11, the first substrate 11 can be effectively caused to generate heat. This is particularly beneficial when only one side of the heating plate 10, such as an outside of the front window 5 of the automobile 1 shown in Fig. 1, is effectively caused to generate heat.

Next, an example of a manufacturing method of the heating plate 10 is described.

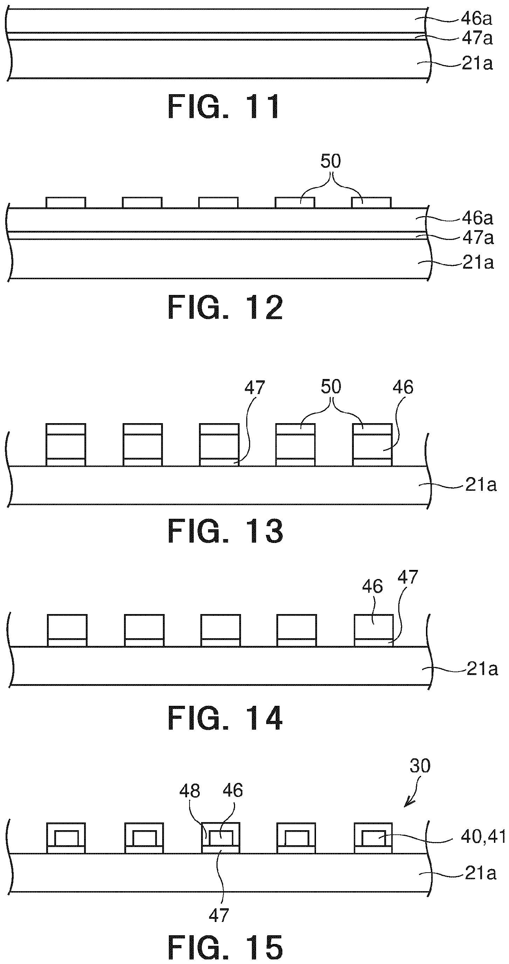

First, as shown in Fig. 11, a dark color film 47a to form the first dark color layer 47 is provided on a base material film 21a to form the first part 21 which is a part of the bonding layer 20. The base material film 21a has a heat seal property.

Then, a conductive film 46a to form the conductive layer 46 is provided on the dark color film 47a. The conductive film 46a can be formed by a known method. For example, a method of attaching a metal foil such as a copper foil, a plating method including electroplating and electroless plating, a sputtering method, a CVD method, a PVD method, an ion plating method, or a method combining two or more of them can be adopted. Alternatively, the conductive film 46a may be formed by applying a paste-like material containing a conductive metal or the like. In addition, two layers may be formed at the same time by attaching an electrolytic copper foil or a rolled copper foil made of the conductive film 46a having the dark color film 47a.

Thereafter, as shown in Fig. 12, a resist pattern 50 is provided on the conductive film 46a. The resist pattern 50 has a shape corresponding to an arrangement pattern of the linear conductors 41 to be formed. The resist pattern 50 can be formed by a patterning method using a known photolithography technique.

Then, the conductive film 46a and the dark color film 47a are etched by using the resist pattern 50 as a mask. Due to this etching, the conductive film 46a and the dark color film 47a are pattered in substantially the same pattern as the resist pattern 50. As a result, as shown in Fig. 13, the conductive layer 46 to form a part of the linear conductor 41 is formed from the patterned conductive film 46a. In addition, the first dark color layer 47 to form a part of the linear conductor 41 is formed from the patterned dark color layer 47a.

The etching method is not limited to wet etching using an etchant, and a known method can be adopted. A known method may be plasma etching. After the etching step, as shown in Fig. 14, the resist pattern 50 is removed.

Thereafter, as shown in Fig. 15, the dark color layer 48 is formed on a surface of the conductive layer 46, which is opposed to the surface on which the first dark color layer 47 is provided, and side surfaces thereof. The second dark color layer 48 can be formed as follows. By subjecting a part of the material forming the conductive layer 46 to a darkening treatment (blackening treatment). Thus, the second dark color layer 48 made of metal oxide or metal sulfide is formed from a part forming the conductive layer 46. In addition, the second dark color layer 48 may be provided on a surface of the conductive layer 46. In addition, the surface of the conductive layer 46 may be roughened, and and the second dark color layer 48 is provided thereon.

The bus bar 35 of the heat generation conductor 30 may be formed integrally with the conductive layer 46 of the linear conductor 41 by patterning the conductive layer 46a. Alternatively, the bus bar 35 may be a conductor separate from the linear conductor 41 provided on the base material film 21a.

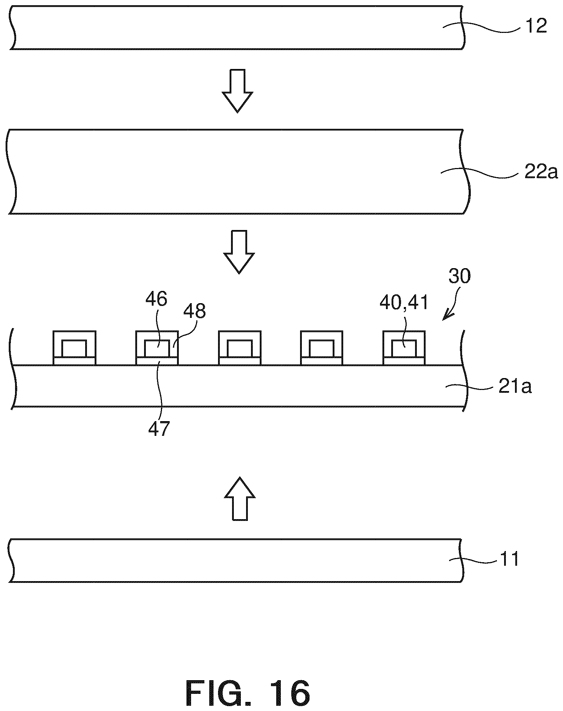

Finally, as shown in Fig. 16, the heat generation conductor 30 supported on the base material film 21a is disposed between the first substrate 11 and the second substrate 12. Further, an adhesive film 22a having a heat seal property is disposed between the first substrate 11 and the second substrate 12 on the heat generation conductor 30 side. The adhesive film 22a will form the second part 22a of the bonding layer 20, and will form the bonding layer 20 together with the base material film 21a. Under this state, the first substrate 11 and the second substrate 12 are pressed and heated toward each other so as to be bonded. The heating plate 10 shown in Fig. 3 is produced by the above steps.

The base material film 21a satisfies at least one of the following conditions: that the first part 21 contains a plasticizer whose amount per unit mass is smaller than the second part 22; that the first part 21 has a glass transition temperature higher than the second part 22; and that the first part 21 has a softening point higher than the second part 22. In addition, the thickness of the first part 21 is thinner than the thickness of the second part 22a. Thus, the bonding layer 20 is manufactured, in which the first part 21 satisfies at least one of the following conditions: that the first part 21 contains a plasticizer whose amount per unit mass is smaller than the second part 22; that the first part 21 has a glass transition temperature higher than the second part 22; and that the first part 21 has a softening point higher than the second part 22, as well as that the thickness T₁ of the first part 21 is shorter than the thickness T₂ of the second part 22.

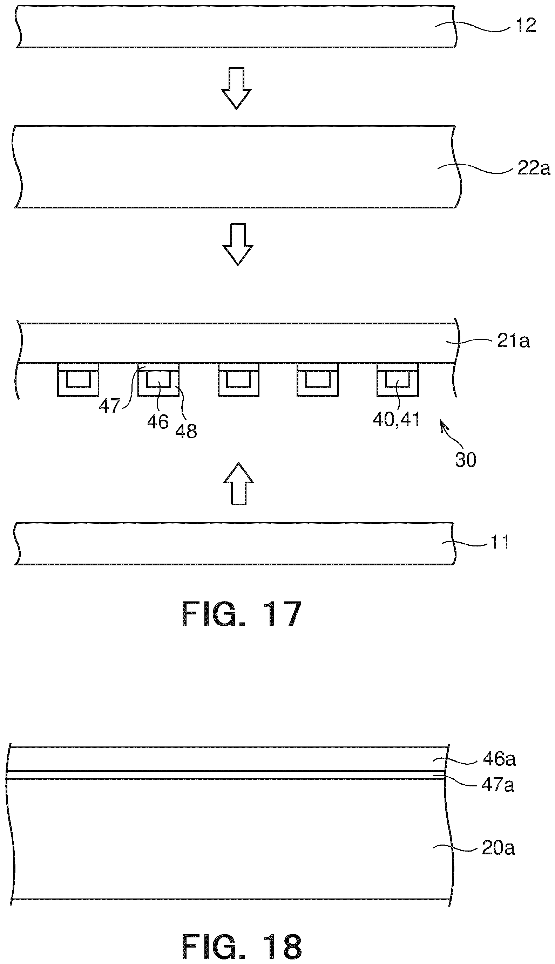

In the step shown in Fig. 16, by disposing the heat generation conductor 30 supported o the base material film 21a in a direction reverse to the illustrated direction, i.e., as shown in Fig. 17, by disposing the heat generation conductor 30 such that the heat generation conductor 30 faces the first substrate 11 and that the base material film 21a faces the adhesive film 22a and the second substrate 12, the heating plate 10 shown in Fig. 4 can be produced.

Further, another example of the manufacturing method of the heating plate 10 is described.

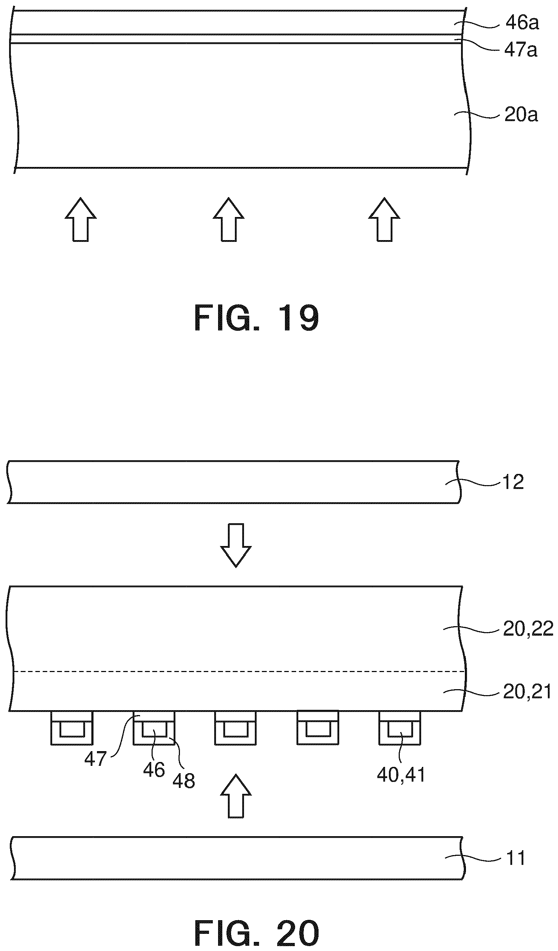

First, as shown in Fig. 18, similarly to the aforementioned example of the manufacturing method of the heating plate 10, the dark color film 47a is provided on the base material film 20a, and the conducive film 46a is provided on the dark color film 46a. In this manufacturing method example, the base material film 20a will form both the first part 21 and the second part 22 of the bonding layer 20. Thereafter, as shown in Fig. 19, an additive agent such as a plasticizer is added from a side opposed to the side on which the conductive film 46a of the base material film 20a is provided. By adding the plasticizer in this manner, an amount per unit mass of the plasticizer contained in the part on which the conductive film 46a of the base material film 20a is provided can be made smaller than an amount per unit mass of the plasticizer contained in the part opposed to the side on which the conductive film 46a of the base material film 20a is provided. The part of the base material film 20, on which the conductive film 46a is provided, will form the first part 21 of the bonding layer 20, and the part of the base material film 20a, which is opposed to the part on which the conducive film 46a is provided, will form the second part 22 of the bonding layer 20.

Then, similarly to the aforementioned manufacturing method example of the heating plate 10, the resist pattern 50 is provided on the conducive film 46a, and the conductive film 46a and the dark color layer 47a are patterned. The conductive layer 46 is formed from the patterned conductive film 46a, and the first dark color layer 47 is formed from the patterned dark color layer 47a. Thereafter, the second dark color layer 48 is formed on a surface of the conductive layer 46, which is opposed to the surface on which the first dark color layer 47 is provided, and side surfaces thereof.

Finally, as shown in Fig. 20, the base material film 21a is disposed between the first substrate 11 and the second substrate 12 such that the side on which the heat generation conductor 30 is formed faces the first substrate 11. Under this state, the first substrate 11 and the second substrate 12 are pressed and heated toward each other so as to be bonded. The heating plate 10 shown in Fig. 4 is produced by the above steps.

The aforementioned step of adding the plasticizer to the base material film 21a may be performed after the step of patterning the conductive film 46a and the dark color film 47a.

As described above, the pattern conductor 40 in this embodiment is a pattern conductor that generates heat when a voltage is applied thereto, comprising:
a plurality of linear conductors 41 extending in a first direction d1; and
a plurality of connection conductors 42 each connecting the at least three linear conductors 41;
wherein:
   the connection conductor 42 includes a plurality of connection elements 43 each connecting the two linear conductors 41;
   a length D of the linear conductor 41 between two connection points 44 where two connection elements 43 that are the connection elements 43 included in one connection conductor 42 and connected to the same linear conductor 41 are connected to the linear conductor 41, is equal to or less than an average of lengths L3 of the two connection elements 43; and
   a length L1 of the linear conductor 41 between two connection points 44 where two connection conductors 42 that are connected to one and the same linear conductor 41 and adjacent to each other in the first direction d1 are connected to the linear conductor 41, is twice or more an average of lengths L2 of the two connection conductors 42.

According to such a pattern conductor 40, since the length D of the linear conductor 41 between two connection points 44 where two connection elements 43 that are the connection elements 43 included in one connection conductor 42 and connected to the same linear conductor 41 are connected to the liner conductor 41 is sufficiently small, even when a lot of current flows between the two connection points 44 where the two connection elements 43 connected to the linear conductor 41 and the linear conductor 41 are connected, excessive heat generation is unlikely to occur. Thus, even when a linear conductor 41 has a breakage, uneven heat generation is hardly to occur. As a result, it is possible to suppress, in a field of view through the heating plate, generation of distortion caused by the uneven heat generation.

Alternatively, the pattern conductor 40 in this embodiment is a pattern conductor that generates heat when a voltage is applied thereto, comprising:
a plurality of linear conductors 41 extending in a first direction d1; and
a plurality of connection conductors 42 each connecting the at least three linear conductors 41;
wherein:
   the connection conductor 42 includes a plurality of connection elements 43 each connecting the two linear conductors 41;
   a length D of the linear conductor 41 between two connection points 44 where two connection elements 43 that are the connection elements 43 included in one connection conductor 42 and connected to the same linear conductor 41 are connected to the linear conductor 41, is 1/2 times or less a length L2 of the connection conductor 42 including the two connection elements 43; and
   a length L1 of the linear conductor 41 between two connection points 44 where two connection conductors 42 that are connected to one and the same linear conductor 41 and adjacent to each other in the first direction d1 are connected to the linear conductor 41, is twice or more an average of lengths L2 of the two connection conductors 42.

According to such a pattern conductor 40, since the length D of the linear conductor 41 between two connection points 44 where two connection elements 43 that are the connection elements 43 included in one connection conductor 42 and connected to the same linear conductor 41 are connected to the linear conductor 41 is sufficiently small, even when a lot of current flows between the two connection points 44 where the two connection elements 43 connected to the linear conductor 41 and the linear conductor 41 are connected, excessive heat generation is unlikely to occur. Thus, even when a linear conductor 41 has a breakage, uneven heat generation is hardly to occur. As a result, it is possible to suppress, in a field of view through the heating plate, generation of distortion caused by the uneven heat generation.

Alternatively, the pattern conductor 40 in this embodiment is a pattern conductor that generates heat when a voltage is applied thereto, comprising:
a plurality of linear conductors 41 extending in a first direction d1; and
a plurality of connection conductors 42 each connecting the at least three linear conductors 41;
wherein:
   the connection conductor 42 includes a plurality of connection elements 43 each connecting the two linear conductors 41;
   a length L1 of the linear conductor 41 between two connection points 44 where two connection conductors 42 that are connected to one and the same linear conductor 41 and adjacent to each other in the first direction d1 are connected to the linear conductor 41, is 1/4 times or less a length L1 of the linear conductor 41 between two connection points 44 where the two connection conductors 42, one of which is the connection conductor 42 including the two connection elements 43, that are connected to the same linear conductor 41 and adjacent to each other in the first direction d1 are connected to the linear conductor 41; and
   a length L1 of the linear conductor 41 between two connection points 44 where two connection conductors 42 that are connected to one and the same linear conductor 41 and adjacent to each other in the first direction d1 are connected to the linear conductor 41, is twice or more an average of lengths L2 of the two connection conductors 42.

According to such a pattern conductor 40, since the length D of the linear conductor 41 between two connection points 44 where two connection elements 43 that are the connection elements 43 included in one connection conductor 42 and connected to the same linear conductor 41 are connected to the linear conductor 41 is sufficiently small, even when a lot of current flows between the two connection points 44 where the two connection elements 43 connected to the linear conductor 41 and the linear conductor 41 are connected, excessive heat generation is unlikely to occur. Thus, even when a linear conductor 41 has a breakage, uneven heat generation is hardly to occur. As a result, it is possible to suppress, in a field of view through the heating plate, generation of distortion caused by the uneven heat generation.

The aforementioned embodiment can be variously modified.

In the aforementioned embodiment, the heating plate 10 is formed to have a curved shape. However, not limited thereto, the heating plate 10 may be formed to have a flat shape.

The heating plate 10 may be used in a rear window, a side window and a sunroof of the automobile 1. In addition to the automobile, the heating plate 10 may be used in a transparent portion of a window or a door of a mobile body such as a railroad vehicle, an aircraft, a ship, a spaceship, etc.

Further, the heating plate 10 may be used, in addition to a mobile body, a transparent portion of a window or a door of a part that delimit a boundary between an inside and an outside, e.g., a building, a store and a residence, a window or a door of an architecture, a transparent portion of a window or a door of an accommodation or storage equipment such as a refrigerator, a display box, a shelf, etc.

Some modification examples of the aforementioned embodiment have been described above. It goes without saying that the modification examples can be combined and applied as appropriate.

- 1: Automobile
- 2: Front window
- 7: Power source
- 10: Heating plate
- 11: First substrate
- 12: Second substrate
- 15: Wiring part
- 20: Bonding layer
- 21: First part
- 22: Second part
- 30: Heat generation conductor
- 35: Bus bar
- 40: Pattern conductor
- 41: Linear conductor
- 42: Connection conductor
- 43: Connection element
- 44: Connection point
- 46: Conductive layer
- 47: First dark color layer
- 48: Second dark color layer
- 49: Gap

## Claims

1. A pattern conductor that generates heat when a voltage is applied thereto, comprising:
a plurality of linear conductors extending in a first direction; and
a plurality of connection conductors each connecting the at least three linear conductors;
wherein:
the connection conductor includes a plurality of connection elements each connecting the two linear conductors;
a length of the linear conductor between two connection points where two connection elements that are the connection elements included in one connection conductor and connected to the same linear conductor are connected to the linear conductor is equal to or less than an average of lengths of the two connection elements; and
a length of the linear conductor between two connection points where two connection conductors that are connected to one and the same linear conductor and adjacent to each other in the first direction are connected to the linear conductor is twice or more an average of lengths of the two connection conductors.

2. A pattern conductor that generates heat when a voltage is applied thereto, comprising:
a plurality of linear conductors extending in a first direction; and
a plurality of connection conductors each connecting the at least three linear conductors;
wherein:
the connection conductor includes a plurality of connection elements each connecting the two linear conductors;
a length of the linear conductor between two connection points where two connection elements that are the connection elements included in one connection conductor and connected to the same linear conductor are connected to the linear conductor is 1/2 times or less a length of the connection conductor including the two connection elements; and
a length of the linear conductor between two connection points where two connection conductors that are connected to one and the same linear conductor and adjacent to each other in the first direction are connected to the linear conductor is twice or more an average of lengths of the two connection conductors.

3. A pattern conductor that generates heat when a voltage is applied thereto, comprising:
a plurality of linear conductors extending in a first direction; and
a plurality of connection conductors each connecting the at least three linear conductors;
wherein:
the connection conductor includes a plurality of connection elements each connecting the two linear conductors;
a length of the linear conductor between two connection points where two connection elements that are the connection elements included in one connection conductor and connected to the same linear conductor are connected to the linear conductor, is 1/4 times or less a length of the linear conductor between two connection points where the two connection conductors, one of which is the connection conductor including the two connection elements, that are connected to the same linear conductor and adjacent to each other in the first direction are connected to the linear conductor; and
a length of the linear conductor between two connection points where two connection conductors that are connected to one and the same linear conductor and adjacent to each other in the first direction are connected to the linear conductor is twice or more an average of lengths of the two connection conductors.

4. The pattern conductor according to any one of claims 1 to 3, wherein
a plurality of the linear conductors connected by a certain connection conductor correspond to a plurality of the linear conductors connected by another connection conductor adjacent to the certain connection conductor in the first direction.

5. A pattern conductor that generates heat when a voltage is applied thereto, comprising:
a plurality of linear conductors extending in a first direction; and
a plurality of connection conductors each connecting the at least three linear conductors;
wherein:
the connection conductor includes a plurality of connection elements each connecting the two linear conductors; and
a plurality of the linear conductors connected by a certain connection conductor correspond to a plurality of the linear conductors connected by another connection conductor adjacent to the certain connection conductor in the first direction.

6. The pattern conductor according to claim 4 or 5, wherein
regarding intervals between respective two connection conductors adjacent to each other in the first direction and connected to the corresponding linear conductors, a ratio of a maximum interval to a minimum interval is 3.0 or less.

7. The pattern conductor according to any one of claims 1\ to 6, wherein
the connection element connects the linear conductors that are adjacent to each other in a second direction not parallel to the first direction.

8. The pattern conductor according to claim 7, wherein
the connection elements included in one connection conductor are continuous in the second direction not parallel to the first direction.

9. The pattern conductor according to any one of claims 1 to 8, wherein
the connection conductor connects the at least three linear conductors that are continuously arranged side by side in the second direction not parallel to the first direction.

10. The pattern conductor according to any one of claims 1 to 9, wherein
the two connection conductors adjacent to each other in the second direction not parallel to the first direction are offset from each other in the first direction.

11. The pattern conductor according to any one of claims 1 to 10, wherein
a ratio of a length of the linear conductor to a length of a straight line connecting both ends of the linear conductor is 1.72 or less.

12. The pattern conductor according to any one of claims 1 to 11, wherein:
a gap is formed between the linear conductors adjacent to each other in the second direction not parallel to the first direction; and
a longitudinal direction of the gap is the first direction.

13. A heating plate comprising:
a first and a second substrates;
a pattern conductor according to any one of claims 1 to 12, the pattern conductor being disposed between the first substrate and the second substrate; and
a bonding layer bonding the first substrate and the second substrate.

14. The heating plate according to claim 13, wherein:
the bonding layer includes a first part adjacent to the pattern conductor, and a second part offset from the first part; and
the first part satisfies at least one of the following conditions that the first part contains a plasticizer whose amount per unit mass is smaller than the second part, that the first part has a glass transition temperature higher than the second part, and that the first part has a softening point higher than the second part.

15. The heating plate according to claim 14, wherein
the pattern conductor is disposed between the first part and the second part, and is adjacent to the second part.

16. The heating plate according to claim 13 or 14, wherein
the pattern conductor has a surface in contact with the first substrate.

17. A mobile body comprising a heating plate according to any one of claims 13 to 16.
